# EUROPÄISCHE PATENTSCHRIFT

(11) **EP 2 519 783 B1**
(45) Veröffentlichungstag und Bekanntmachung des Hinweises auf die Patenterteilung: **21.06.2017**
(21) Anmeldenummer: 10803102.2
(22) Anmeldetag: 31.12.2010
(51) Int. Cl.: F24F 5/00, F24D 3/12

(54) **EINRICHTUNG ZUR TEMPERIERUNG EINES RAUMS**
DEVICE FOR TEMPERING A CHAMBER
DISPOSITIF DE THERMORÉGULATION D'UNE PIÈCE

(30) Priorität: 31.12.2009 DE 102009055441
(43) Veröffentlichungstag der Anmeldung: 07.11.2012
(73) Patentinhaber: SGL Carbon SE, 65201 Wiesbaden (DE)
(72) Erfinder: GUCKERT, Werner, 86674 Baar (DE); KIPFELSBERGER, Christian, 95199 Naila (DE); MICHELS, Robert, 86672 Thierhaupten (DE); RAUCH, Siegfried, 86368 Gersthofen (DE)
(86) Internationale Anmeldenummer: PCT/EP2010/070978
(87) Internationale Veröffentlichungsnummer: WO 2011/080338

(56) Entgegenhaltungen:
- EP-A1- 0 133 631
- EP-A2- 1 512 933
- WO-A1-03/064931
- DE-A1- 19 601 590
- DE-A1-102005 029 051
- DE-U1-202009 000 961
- DE-U1-202009 011 329

## Beschreibung

Die Erfindung betrifft eine Einrichtung sowie ein Verfahren zur Temperierung eines Raumes nach den Oberbegriffen der Ansprüche 1 und 27.

Zur Klimatisierung von Räumen mit Betondecken oder Betonwänden sind aus dem Stand der Technik sogenannte Betonkernaktivierungs-Systeme bekannt. Bei diesen werden Heiz- oder Kühlmedien führende Rohrleitungen in, unter oder auf der Betondecke bzw. der Betonwand angebracht. Durch Speicherung der Heiz- bzw. Kühlenergie in der Betonmasse der Decke bzw. der Wände und einer zeitverzögerten Abgabe der gespeicherten Heiz- bzw. Kühlenergie kann eine energieeffiziente Klimatisierung der Räume erzielt werden. So kann beispielsweise in der Nacht ein Kühlfluid (beispielsweise Wasser) abgekühlt und durch die Rohrleitungen in einer betonkernaktivierten Decke oder Wand geleitet werden, wodurch sich die Decke bzw. die Wand langsam abkühlt. Die so in der Betondecke bzw. -wand gespeicherte Kühlenergie kann dann während des Tages, insbesondere in warmen Sommermonaten, zur Erniedrigung der Raumtemperatur langsam in den Raum abgegeben werden.

Der Einbau solcher thermisch aktivierbaren Decken oder Wände ist allerdings auf Neubauten beschränkt. Bei der Sanierung von Altbauten kann eine solche Betonkernaktivierung der Decken oder Wände nicht nachträglich eingebaut werden. Bei Decken oder Wänden mit einer Betonkernaktivierung ist darüber hinaus nachteilig, dass die in der Betondecke- bzw. -wand verlegten Rohrleitungen unbeabsichtigt beschädigt werden können, beispielsweise durch das Bohren von Löchern. Eine Reparatur von beschädigten Rohrleitungen ist kaum möglich, da die einbetonierten Rohrleitungen für eine Reparatur schwer zugänglich sind. Auch die Statik und die Stabilität der mit Rohrleitungen versehenen Decken oder Wände leidet unter den einbetonierten Rohrleitungen. Darüber hinaus ist die Herstellung solcher Betonkernaktivierungssysteme sehr zeitaufwändig und kostspielig. Ein weiterer Nachteil liegt in der Trägheit des thermischen Systems, welches auf der zeitverzögerten Abgabe der in der Beton-Speichermasse gespeicherten thermischen Energie an den zu temperierenden Raum beruht.

Zur Beseitigung dieser Nachteile sind aus dem Stand der Technik Temperiersysteme bekannt, die auch nachträglich an rohrleitungsfreien Decken oder Wände angeordnet werden können. Diese Temperiersysteme umfassen in der Regel Decken- oder Wandelemente, in denen Rohrleitungen angeordnet sind, welche mit einem Heiz- oder Kühlmedium beaufschlagt werden können. Diese Decken- oder Wandelemente werden an der Decke bzw. Wand befestigt. Die in dem Heiz- oder Kühlmedium, welches durch die Rohrleitungen geleitet wird, gespeicherte thermische Energie wird über einen Rahmen oder eine Verkleidung der Decken- bzw. Wandelemente in den zu temperierenden Raum durch Wärmestrahlung und freie Konvektion abgeleitet. Ein solches System ist bspw. in der EP 1371915 A1 beschrieben, bei dem Phasenwechselmaterialien als Wärmespeicher zur Anwendung kommen.

Diese Temperiersysteme haben den Nachteil, dass die thermische Energie von dem in den Rohrleitungen fließenden Heiz- oder Kühlmedium unmittelbar und instantan durch Wärmestrahlung und Konvektion in den Raum abgegeben wird.

Die Oberflächen der Decken bzw. der Wände werden bei diesen Temperiersystemen darüber hinaus mit den Decken- oder Wandelementen belegt. Dies führt dazu, dass die Decken- oder Wandfläche von dem zu temperierenden Raum thermisch getrennt werden, weshalb die Masse der Decken bzw. der Wände für eine Speicherkühlung (oder -erwärmung) in der Nacht nicht genutzt werden können. Eine Anordnung gemäß dem Oberbegriff von Anspruch 1 ist aus DE 10 2005 029051 A1 bekannt. Hiervon ausgehend liegt der Erfindung die Aufgabe zugrunde, eine Einrichtung und ein Verfahren zur Temperierung eines Raumes aufzuzeigen, bei denen die Masse der Decken oder Wände als thermischer Speicher genutzt werden kann, ohne dass Rohrleitungen zur Durchleitung eines Heiz- oder Kühlmediums zur thermischen Aktivierung des Speichers in die Decken oder Wände eingebracht werden müssen. Der Erfindung liegt weiterhin die Aufgabe zugrunde, ein möglichst energieeffizientes Temperiersystem mit kurzen Ansprechzeiten aufzuzeigen. Darüber hinaus soll es ermöglicht werden, dieses Temperiersystem auch bei der Sanierung von Altbauten nachträglich einzubauen.

Gelöst werden diese Aufgaben mit einer Einrichtung zur Temperierung eines Raumes mit den Merkmalen des Anspruchs 1 sowie mit einem Verfahren mit den Merkmalen des Anspruchs 27. Bevorzugte Ausführungsformen der erfindungsgemäßen Einrichtung sind den Unteransprüchen 2 bis 26 zu entnehmen.

Nachfolgend wird die Erfindung anhand von Ausführungsbeispielen unter Bezugnahme auf die begleitenden Zeichnungen näher erläutert. Die Zeichnungen zeigen:
- **Figur 1:**: Schematische Schnittdarstellung einer erfindungsgemäßen Einrichtung zur Temperierung eines Raumes in einer ersten Ausführungsform;
- **Figur 2:**: Schematische Schnittdarstellung eines Decken- oder Wandelements für eine erfindungsgemäße Temperiereinrichtung in einer zweiten Ausführungsform;
- **Figur 3:**: Schematische Schnittdarstellung der zweiten Ausführungsform einer erfindungsgemäßen Temperiereinrichtung mit dem Decken- oder Wandelement von Figur 2.

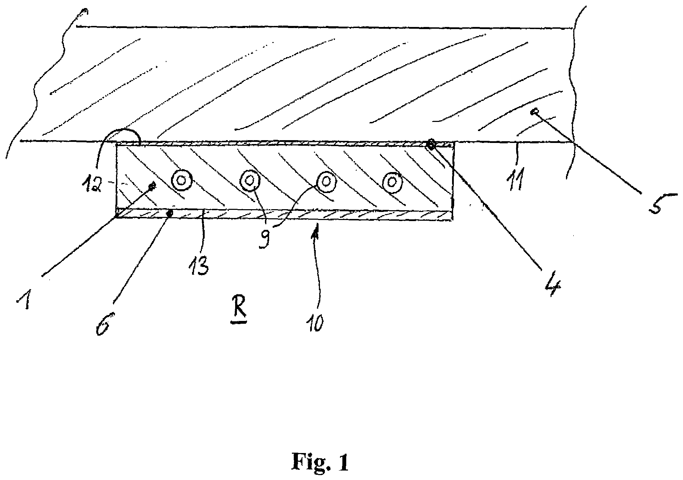

In Figur 1 ist eine erste Ausführungsform einer erfindungsgemäßen Temperierungseinrichtung gezeigt. Diese umfasst ein an einem Bauelement 5 aus Beton oder Ziegel angeordnetes Element 10. Bei dem Bauelement 5 kann es sich um eine Decke oder eine Wand oder um einen Fußboden des zu temperierenden Raumes R handeln. Das Bauelement 5 kann auch aus einem anderen herkömmlichen Baumaterial aufgebaut sein, das in der Lage ist Wärme und/oder Kälte zu speichern, wie Lehm oder Naturstein. Bei dem Element 10 handelt es sich dann entsprechend um ein Decken-, Wand- oder ein Bodenelement, welches an der in den Raum weisenden Oberfläche 11 des Bauelements 5 angeordnet ist. Aufgrund seiner großen Masse stellt das Bauelement 5 einen thermischen Speicher dar, in dem thermische Energie (in Form von Wärme oder Kälte) gespeichert werden kann.

Bei dem Element 10 handelt es sich um eine Platte 1, welche expandiertes Graphit enthält oder vollständig aus Graphitexpandat besteht.

Die Herstellung von expandiertem Graphit (Graphitexpandat) ist u.a. aus der US 3,404,061-A bekannt. Zur Herstellung von expandiertem Graphit werden Graphiteinlagerungsverbindungen bzw. Graphitsalze wie z.B. Graphithydrogensulfat oder Graphitnitrat schockartig erhitzt. Dabei vergrößert sich das Volumen der Graphitpartikel um einen Faktor von ca. 200 - 400 und gleichzeitig sinkt die Schüttdichte auf Werte von 2 - 20 g/l. Das so erhaltene Graphitexpandat besteht aus wurm- bzw. ziehharmonikaförmigen Aggregaten. Wird vollständig expandiertes Graphit unter gerichteter Einwirkung eines Druckes kompaktiert, ordnen sich die Schichtebenen des Graphits bevorzugt senkrecht zur Einwirkungsrichtung des Druckes an, wobei sich die einzelnen Aggregate untereinander verhaken. Auf diese Weise lassen sich selbsttragende Flächengebilde wie z.B. Bahnen, Platten oder Formkörper aus expandiertem Graphit herstellen.

Zur Versteifung und Erhöhung der Stabilität solcher Graphit-Platten oder-Formkörper kann das expandierte Graphit mit aushärtenden Bindemitteln, wie z.B. Harze oder Kunststoffe, insbesondere Elastomere oder Duromere, vermischt werden. Zur Verbesserung der Stabilität von Platten aus expandiertem Graphit eignet sich insbesondere die Vermischung des expandierten Graphits mit thermoplastischen und/oder duroplastischen Kunststoffen, welche beispielsweise durch Imprägnierung oder über ein Pulververfahren in das expandierte Graphit eingebracht werden können. Nach erfolgter Aushärtung des mit dem expandierten Graphit vermischten Bindemittels weisen die aus diesen Mischungen hergestellte Graphit-Formkörper oder -Platten eine für den erfindungsgemäß vorgesehenen Anwendungszweck ausreichende Stabilität auf. Die auf diese Weise hergestellten Graphit-Platten sind insbesondere selbsttragend und können ohne weiteres beispielsweise durch Verkleben oder Verschrauben an Bauelemente wie Decken oder Wände befestigt werden.

Reines Graphitexpandat verfügt ebenso wie Gemische aus expandiertem Graphit mit Bindemitteln über eine sehr gute Wärmeleitfähigkeit. Die Wärmeleitfähigkeit eines Gemisches aus expandiertem Graphit mit einem Bindemittel ist bei einem 50 Gew.%-igen Bindemittelanteil je nach Art des verwendeten Bindemittels immer noch sehr hoch. Soweit im folgenden von Graphit-Platten gesprochen wird, werden darunter Platten verstanden, die entweder aus reinem Graphitexpandat bestehen oder aus einer Mischung von expandiertem Graphit mit einem Bindemittel.

Es ist auch möglich Graphit-Platten aus Mischungen von expandiertem Graphit mit Phasenwechselmaterialien (PCM, phase change materials) herzustellen. Hierfür können gängige Phasenwechselmaterialien bspw. auf Paraffin-, Wachs - oder Salzbasis, bei der Herstellung der Graphitplatten beigemischt werden. Eine solche Graphitplatte mit einem Phasenwechselmaterial kann in den erfindungsgemäßen Temperiersystemen als weiterer Thermospeicher (Latentwärmespeicher) neben dem als thermischer Speicher wirkenden Bauelement 5 eingesetzt werden.

In der in Figur 1 dargestellten Graphit-Platte 1 sind Rohrleitungen 9 eingebettet. Die Rohrleitungen 9 sind bevorzugt schlangenförmig im Innern der Platte 1 angeordnet. Andere Verlegungsformen der Rohrleitungen, wie z.B. eine spiralförmige, gitterförmige oder mäanderförmige Anordnung, oder eine Anordnung nur in den Randbereichen der Platte 1 ist denkbar. Die Enden der in der Platte 1 verlaufenden Rohrleitungen 9 werden an eine Fördereinrichtung zur Durchleitung eines Heiz- oder Kühlmediums (wie z.B. heißes oder kaltes Wasser) durch die Rohrleitungen 9 angeschlossen. Um die gesamte, in den Raum R weisende Oberfläche 11 des Bauteils 5 mit Elementen 10 zu versehen, können auch mehrere solcher Elemente 10 hinter- bzw. nebeneinander liegend angeordnet und an der Oberfläche 11 befestigt werden. Die Enden der Rohrleitungen 9 jedes Elements 10 werden dann mit den zugeordneten Enden der benachbarten Elemente 10 zur Bildung eines Leitungskreislaufs verbunden und der Leitungskreislauf wird an die Fördereinrichtung zur Durchleitung des Heiz- oder Kühlmediums gekoppelt.

Die Befestigung der Elemente 10 erfolgt bevorzugt durch einen thermisch leitenden Kleber 4, mit dem die eine Hauptfläche 12 der Platte an der Oberfläche 11 des Bauelements 5 verklebt wird. Durch die Verklebung steht die Hauptfläche 12 der Platte 1 flächig und bevorzugt über die gesamte Hauptfläche 12 in thermischem Kontakt mit der Oberfläche 11 des durch das Bauelement 5 gebildeten thermischen Speichers.

Die andere Hauptfläche 13 der Platte 1 kann, wie bei dem in Figur 1 gezeigten Ausführungsbeispiel, mit einer Versteifungsschicht 6 versehen werden. Bei der Versteifungsschicht 6 kann es sich beispielsweise um eine Putzschicht oder eine aufgeklebte Hartkarton- oder Gipskarton-Schicht handeln. Auch Kombinationen von Putzschichten und darin eingebetteten Textil-Stoffen, wie z.B. Netzen, Geweben, Gestricken, Gewirken oder dergleichen ist möglich. Durch die Versteifungsschicht 6 kann einerseits die Stabilität der Graphit-Platte 1 erhöht werden und andererseits kann die in den Raum R weisende Hauptfläche 13 der Platte 1 optisch ansprechend verkleidet werden. Das Aufbringen einer Versteifungsschicht 6 bietet sich insbesondere bei Platten 1 an, die aus reinem Graphitexpandat (ohne Zusatz von Bindemittel) gefertigt sind.

Die in der Platte 1 verlaufenden Rohrleitungen 9 können bereits bei der Herstellung der Graphitplatte 1 eingebracht werden. Bei den Rohrleitungen 9 handelt es sich bevorzugt um Rohre aus Metall, beispielsweise Kupfer, oder um Kunststoffrohre, beispielsweise aus Polypropylen oder vernetztem Polyethylen. Wegen des besseren Wärmeübergangs sind jedoch Rohre aus Metall zu bevorzugen. Die Rohrleitungen 9 können - wie in dem Ausführungsbeispiel der Figur 1 gezeigt - vollständig in die Platte 1 eingebettet werden. Es ist jedoch auch möglich, die Rohrleitungen 9 so anzuordnen, dass sie bündig mit einer Hauptfläche 12 oder 13 der Platte 1 abschließen.

Zum Einbetten der Rohrleitungen 9 in die Platte 1 können die Rohrleitungen 9 bei der Plattenherstellung in die Aufschüttung der wurm- bzw. ziehharmonikaförmigen Graphit-Aggregaten eingelegt und diese Zusammensetzung anschließend in bekannter Weise durch Druckeinwirkung (beispielsweise mittels Walzen oder Druckplatten) zu einer formstabilen Graphit-Platte 1 verpresst werden. Um die Stabilität der Platten zu erhöhen, kann beim Herstellungsprozess eines der bereits genannten Bindemittel zugegeben werden. Die so hergestellten Graphit-Platten 1 mit darin eingebetteten Rohrleitungen 9 weisen typischerweise Dicken zwischen 8 und 50 mm auf. Die Dichte der Graphitplatten 1 liegt regelmäßig im Bereich von 0,01 bis 0,5 g/cm³ (je nach Anteil des zugegebenen Bindemittels). Die Graphitplatten 1 weisen eine Wärmeleitfähigkeit von 3 bis 6 W/m K auf.

Aufgrund der guten thermischen Leitfähigkeit der Graphit-Platte 1 kann die in einem durch die Rohrleitungen 9 geleiteten Heiz- oder Kühlmedium gespeicherte thermische Energie zu einem gewissen Teil zunächst durch Wärmeleitung von den Rohrleitungen 9 zur freien Hauptfläche 13 der Platte 1 geleitet und von dort durch Wärmestrahlung und freie Konvektion an den zu temperierenden Raum R abgegeben werden. Diese Wärmeabgabe (bzw. Kälteabgabe bei Durchleitung eines Kühlmediums durch die Rohrleitungen) erfolgt sehr rasch, wodurch der Raum sehr schnell aufgeheizt (bzw. abgekühlt) werden kann. Ein anderer Teil der in dem Heiz- oder Kühlmedium gespeicherten thermischen Energie wird durch Wärmeleitung von den Rohrleitungen 9 über die wärmeleitende Platte 1 an den von dem Bauelement 5 gebildeten thermischen Speicher übertragen. Dadurch wird der thermische Speicher aufgeheizt (bzw. bei Durchleitung eines Kühlmediums durch Rohrleitungen abgekühlt). Der thermische Speicher kann die so zwischengespeicherte thermische Energie dann zeitverzögert an den Raum abgeben, wobei die gute thermische Leitfähigkeit der Platte 1 dafür sorgt, dass dies weitgehend verlustfrei erfolgt. Die auf diese Weise erfolgende Aufheizung (bzw. Abkühlung) des Raumes R erfolgt auf einer längeren Zeitskala (von einigen Stunden). Das erfindungsgemäße Temperierungssystem ist daher in der Lage, den zu temperierenden Raum R sowohl rasch als auch unter Ausnutzung des thermischen Speichers auf langsame Weise auf eine gewünschte Raumtemperatur zu bringen. So kann beispielsweise im Sommer in der Nacht der thermische Speicher durch Durchleiten eines Kühlmediums (beispielsweise kaltes Wasser) durch die Rohrleitungen 9 abgekühlt werden. Während des Tages kann der thermische Speicher dann zur Kühlung des Raumes über eine zeitverzögerte Abgabe der Kälte an den Raum genutzt werden.

In entsprechender Weise kann das erfindungsgemäße Temperiersystem im Winter während des Tages zunächst zur instantanen Heizung des Raumes durch Durchleiten eines Heizmediums durch die Rohrleitungen aufgeheizt werden. Gleichzeitig wird der thermische Speicher mit Wärme beladen. In der Nacht kann der Durchfluss des Heizmediums abgestellt werden, da die zeitverzögerte Abgabe der Wärme aus dem beladenen thermischen Speicher ausreicht, um den Raum in der Nacht auf eine (niedrigere) Raumtemperatur zu halten.

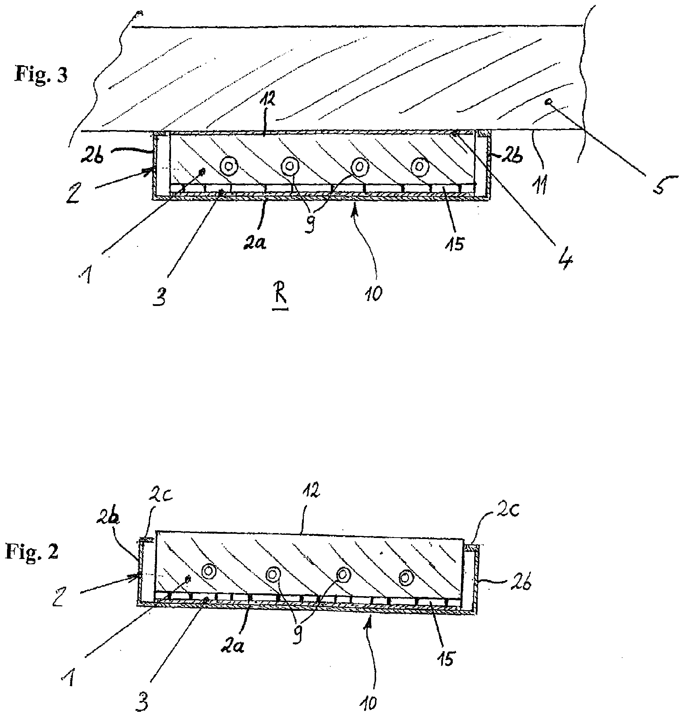

In den Figuren 2 und 3 ist ein weiteres Ausführungsbeispiel eines erfindungsgemäßen Temperiersystems dargestellt. Gleiche oder entsprechende Teile sind in den Figuren 2 und 3 mit den gleichen Bezugszeichen versehen wie in Figur 1.

Bei dem in Figur 3 gezeigten Ausführungsbeispiel einer erfindungsgemäßen Einrichtung zur Temperierung eines Raumes R ist ein Deckenelement 10 an einem als Betondecke ausgebildeten Bauelement 5 befestigt. Das Bauelement 5 bildet einen thermischen Speicher mit der Betonmasse der Decke als Speichermasse. Das Deckenelement 10 weist einen Rahmen 2 auf, der an der in den Raum R weisenden Oberfläche 11 des Bauelements 5 befestigt, insbesondere angeschraubt ist. Der Rahmen 2 ist als Kassette ausgebildet, welche an einer Seite (nämlich ihrer Oberseite) offen ist. Der Rahmen 2 ist bevorzugt aus einem thermisch leitfähigen Material, wie z.B. einem Metallblech gefertigt. Der Rahmen 2 verfügt über eine Bodenplatte 2a und vier daran angeordnete oder mit der Bodenplatte 2a einstückig ausgebildete Seitenwände 2b. Zumindest die Bodenplatte 2a (und gegebenenfalls auch die Seitenwände 2b) ist aus einem Lochblech (also einem Metallblech mit einer Perforation) gebildet. In dem Rahmen 2 ist eine Graphit-Platte 1 eingelegt. Die Zusammensetzung der Graphit-Platte 1 entspricht der Platte 1 des Ausführungsbeispiels von Figur 1. Wie bei diesem Ausführungsbeispiel sind auch hier Rohrleitungen 9 in die Graphit-Platte 1 eingebettet und verlaufen dort schlangen-, gitter-, spiral- oder mäanderförmig. Die Graphit-Platte 1 ist bevorzugt über einen thermisch leitfähigen Kleber 4 an der Oberfläche 11 des Bauelements 5 flächig verklebt. Die Hauptfläche 12 der Graphit-Platte 1 steht damit zweckmäßig über ihre gesamte Oberfläche in thermischem Kontakt mit der Oberfläche 11 des Bauelements 5. Auf die Kleberschicht 4 kann jedoch auch verzichtet werden (s.u.).

Zwischen der Bodenplatte 2a des Rahmens 2 und der Graphit-Platte 1 ist bevorzugt ein Vlies 3 sowie eine Graphitfolie 15 angeordnet. Bei dem Vlies 3 kann es sich beispielsweise um ein Glasfaser- oder ein Kohlefaservlies handeln. In Verbindung mit der Lochperforation der Bodenplatte 2 stellt das Vlies 3 eine gute Schallabsorption des Deckenelements 10 sicher. Bei der Graphitfolie 15 handelt es sich um eine dünne Folie aus expandiertem Graphit. Die Dicke der Graphitfolie 15 liegt bevorzugt zwischen 0,05 mm und 3 mm, insbesondere zwischen 0,2 und 3 mm.

Bevorzugt handelt es sich bei dem Vlies 3 und der darauf angeordneten Graphitfolie 15 um einen nicht lösbaren Verbund, der beispielsweise durch Kalandrieren hergestellt werden kann. Ein solcher Verbund kann besonders zweckmäßig aus einem Kohlefaservlies und einer Graphitfolie 15 aus expandiertem Graphit hergestellt werden. Beim Kalandrieren einer dünnen Folie aus expandiertem Graphit mit einem Kohlefaservlies verhaken sich die Kohlepartikel der Vlies-Oberfläche und der Oberfläche der Graphitfolie miteinander, so dass ein fester und nicht lösbarer Verbund zwischen dem Kohlefaservlies 3 und der Graphitfolie 15 entsteht. Besonders zweckmäßig ist dabei die Verwendung einer perforierten Graphitfolie 15. Eine Perforation der Graphitfolie 15 erhöht nämlich deren Flexibilität und erleichtert dadurch die Handhabbarkeit der Folie. Da es sich bei Graphit um ein sprödes Material handelt, besteht bei der Handhabung von dünnen Folien aus expandiertem Graphit die Gefahr, dass die Folie reißt oder bricht. Diese Gefahr kann durch eine Perforation der Graphitfolie 15 deutlich verringert werden.

In Figur 2 ist eine Schnittdarstellung eines Deckenelements 10 gezeigt, wie es in dem in Figur 3 dargestellten Ausführungsbeispiel der erfindungsgemäßen Temperiereinrichtung zum Einsatz kommen kann. Wie sich aus Figur 2 ergibt, steht die obere Hauptfläche 12 der Graphit-Platte 1 über der Oberkante 2c der Seitenwände 2b des Rahmens 2 hervor. Bei der Verwendung eines solchen Deckenelements 10 kann auf das Verkleben der Graphit-Platte 1 an der Oberfläche 11 des Bauelements 5 verzichtet werden. Zur Befestigung des Deckenelements 10 an dem Bauelement 5 wird nämlich der Rahmen 2 an dem Bauelement 5 angeschraubt. Beim Anschrauben des Rahmens 2 an der Oberfläche 11 des Bauelements 5 wird die Graphit-Platte 1 zusammengedrückt, bis die Hauptfläche 12 der Platte 1 bündig mit der Oberkante 2c der Seitenwände 2b des Rahmens abschließt. Das Zusammendrücken der Graphit-Platte 1 wird dabei durch die Verformbarkeit des expandierten Graphits ermöglicht. Das in Lotrichtung zur Oberfläche 11 zusammengedrückte Graphitmaterial der Platte 1 steht nach der Befestigung des Deckenelements 10 an dem Bauelement 5 zweckmäßig über die gesamte Hauptfläche 12 in thermischem Kontakt mit der Oberfläche 11. Durch die gute Verformbarkeit des Graphitmaterials der Platte 1 können dabei auch Unebenheiten und Vorsprünge in der Oberfläche 11 des Bauelements 5 ausgeglichen werden.

Die Anordnung des Deckenelements 10 oder mehrerer nebeneinander angeordneten Deckenelementen an der Oberfläche 11 des Bauelements 5 entspricht dem oben beschriebenen Ausführungsbeispiel der Figur 1. Auch die Funktionsweise der Temperiereinrichtung der Figur 3 ist dieselbe wie im Ausführungsbeispiel der Figur 1.

## Patentansprüche

1. Einrichtung zur Temperierung eines Raumes, wobei die Einrichtung wenigstens ein Bauelement (5), welches einen thermischen Speicher bildet und eine in den Raum weisende Oberfläche (11) aufweist, sowie mit dem Bauelement (5) thermisch gekoppelte Rohrleitungen (9) umfasst, welche mit einem Heiz- oder Kühlmedium beaufschlagbar sind, **dadurch gekennzeichnet, dass** die Rohrleitungen (9) in eine Platte (1), welche expandiertes Graphit enthält oder aus Graphitexpandat besteht, eingebettet sind und die Platte (1) flächig mit der in den Raum weisenden Oberfläche (11) des Bauelements in thermischem Kontakt steht.

2. Einrichtung nach Anspruch 1, **dadurch gekennzeichnet, dass** die Platte (1) aus expandiertem Graphit über eine thermisch leitende Kleberschicht (4) an der Oberfläche (11) des Bauelements (5) befestigt ist.

3. Einrichtung nach Anspruch 1 oder 2, **dadurch gekennzeichnet, dass** die Rohrleitungen (9) schlangenförmig, gitterförmig, spiralförmig oder mäanderförmig in der Platte (1) verlaufen.

4. Einrichtung nach einem der voranstehenden Ansprüchen, **dadurch gekennzeichnet, dass** die Platte (1) über ihre gesamte, der Oberfläche 11 zugewandten Hauptfläche (12) mit der Oberfläche (11) des Bauelements (5) in wärmeleitender Verbindung steht.

5. Einrichtung nach einem der voranstehenden Ansprüchen, **dadurch gekennzeichnet, dass** die Dichte der Platte (1) zwischen 0,04 und 0,10 g/cm³ liegt.

6. Einrichtung nach einem der voranstehenden Ansprüchen, **dadurch gekennzeichnet, dass** die Platte (1) eine Wärmeleitfähigkeit von mehr als 2 W/mK aufweist.

7. Einrichtung nach einem der voranstehenden Ansprüchen, **dadurch gekennzeichnet, dass** die Platte (1) aus einer Mischung von expandiertem Graphit und einem Bindemittel, insbesondere einem Harz oder einem Kunststoff, gefertigt ist.

8. Einrichtung nach Anspruch 7, **dadurch gekennzeichnet, dass** der Anteil des Bindemittels bei 5 bis 50 Gew.% und bevorzugt zwischen 8 bis 12 Gew.% liegt.

9. Einrichtung nach einem der Ansprüche 1 bis 6, **dadurch gekennzeichnet, dass** die Platte (1) aus einer Mischung von expandiertem Graphit und einem Latentwärmespeichermaterial (PCM), insbesondere auf Salz-, Wachs- oder Paraffinbasis, gefertigt ist.

10. Einrichtung nach einem der voranstehenden Ansprüchen, **dadurch gekennzeichnet, dass** es sich bei dem Bauelement (5) um eine Betondecke oder Betonwand handelt.

11. Einrichtung nach einem der voranstehenden Ansprüchen, **dadurch gekennzeichnet, dass** an der Oberfläche (11) des Bauelements (5) mehrere Platten (1) mit darin eingebetteten Rohrleitungen (9) nebeneinander liegend befestigt sind.

12. Einrichtung nach Anspruch 11, **dadurch gekennzeichnet, dass** die Rohrleitungen (9) von nebeneinander liegenden Platten (1) zur Bildung eines Leitungskreislaufs miteinander verbunden sind und dass der Leitungskreislauf an eine Fördereinrichtung zur Durchleitung eines Heiz- oder Kühlmediums durch die Rohrleitungen (9) gekoppelt ist.

13. Einrichtung nach einem der voranstehenden Ansprüchen, **dadurch gekennzeichnet, dass** auf der dem Bauelement (5) abgewandten Oberfläche (13) der Platte (1) eine Versteifungsschicht (6) aufgebracht ist.

14. Einrichtung nach einem der voranstehenden Ansprüchen, **dadurch gekennzeichnet, dass** auf beiden Oberflächen (12, 13) der Platte (1) eine Versteifungsschicht (6) aufgebracht ist.

15. Einrichtung nach einem der voranstehenden Ansprüchen, **dadurch gekennzeichnet, dass** die Platte (1) in einem an dem Bauelement (1) befestigten Rahmen (2) angeordnet ist.

16. Einrichtung nach Anspruch 15, **dadurch gekennzeichnet, dass** der Rahmen (2) aus einem thermisch leitfähigen Material, insbesondere aus einem Metallblech gefertigt ist.

17. Einrichtung nach Anspruch 15 oder 16, **dadurch gekennzeichnet, dass** die Platte (1) in dem Rahmen (2) eingeklebt ist.

18. Einrichtung nach einem der Ansprüche 15 bis 17, **dadurch gekennzeichnet, dass** der Rahmen als Kassette (2) ausgebildet ist, welche an einer Seite offen ist.

19. Einrichtung nach einem der Ansprüche 15 bis 18, **dadurch gekennzeichnet, dass** die in der Kassette angeordnete Platte (1) an der offenen Seite der Kassette über deren Rahmenkante (2c) vorsteht.

20. Einrichtung nach einem der Ansprüche 15 bis 19, **dadurch gekennzeichnet, dass** der Rahmen (2) als Kassette mit einer perforierten Bodenplatte (2a) ausgebildet ist.

21. Einrichtung nach Anspruch 20, **dadurch gekennzeichnet, dass** zwischen der Bodenplatte (2a) des Rahmens (2) und der Platte (1) ein Vlies (3) und eine perforierte Graphitfolie (15) angeordnet sind.

22. Einrichtung nach einem der Ansprüche 20 oder 21, **dadurch gekennzeichnet, dass** es sich bei der Graphitfolie (15) um eine Folie aus expandiertem Graphit mit einer Lochperforation handelt.

23. Einrichtung nach einem der Ansprüche 20 bis 22, **dadurch gekennzeichnet, dass** die perforierte Graphitfolie (15) fest mit dem Vlies (3) verbunden ist.

24. Einrichtung nach einem der Ansprüche 20 bis 23, **dadurch gekennzeichnet, dass** es sich bei dem Vlies (3) um ein Glasfaservlies oder um ein Kohlefaservlies handelt.

25. Einrichtung nach einem der Ansprüche 20 bis 24, **dadurch gekennzeichnet, dass** es sich bei dem Vlies (3) um ein Kohlefaservlies handelt, welches durch Kalandrieren mit der perforierten Graphitfolie (15) verbunden ist.

26. Einrichtung nach einem der voranstehenden Ansprüchen, **dadurch gekennzeichnet, dass** die Platte (1) mit den darin eingebetteten Rohrleitungen (9) selbsttragend ist.

27. Verfahren zur Temperierung eines zumindest einseitig von einem Bauelement (5) begrenzten Raumes, wobei das Bauelement (5) eine in den Raum weisende Oberfläche (11) aufweist und die Masse des Bauelements (5) einen thermischen Speicher bildet, welcher mit Rohrleitungen (9), durch welche ein Heiz- oder Kühlmedium geleitet wird, thermisch gekoppelt ist, **dadurch gekennzeichnet, dass** die Rohrleitungen (9) in eine thermisch leitende Platte (1), welche expandiertes Graphit enthält oder aus Graphitexpandat besteht, eingebettet sind und die Platte (1) flächig mit der in den Raum weisenden Oberfläche (11) des Bauelements (5) in thermischem Kontakt steht, so dass zumindest ein Teil der in dem Heiz- oder Kühlmedium gespeicherten thermischen Energie durch Wärmeleitung von den Rohrleitungen (9) über die thermisch leitende Platte (1) an den thermischen Speicher zur Zwischenspeicherung übertragen und von dort zeitverzögert an den Raum abgegeben wird.

## Claims

1. Device for temperature-controlling a chamber, the device comprising at least one component (5) which forms a thermal store and which has a surface (11) facing into the chamber, and comprising pipelines (9) which are thermally coupled to the component (5) and which can be loaded with a heating or cooling medium, **characterised in that** the pipelines (9) are embedded in a plate (1) which contains expanded graphite or consists of graphite expandate, and the plate (1) is in planar thermal contact with the surface (11) of the component facing into the chamber.

2. Device according to claim 1, **characterised in that** the expanded graphite plate (1) is fixed to the surface (11) of the component (5) via a thermally conductive adhesive layer (4).

3. Device according to either claim 1 or claim 2, **characterised in that** the pipelines (9) extend in a serpentiform shape, a grid shape, a spiral shape or a meander shape in the plate (1).

4. Device according to any of the preceding claims, **characterised in that** the plate (1) is in a thermally conductive connection, over the entire primary surface (12) thereof facing the surface 11, with the surface (11) of the component (5).

5. Device according to any of the preceding claims, **characterised in that** the density of the plate (1) is between 0.04 and 0.10 g/cm³.

6. Device according to any of the preceding claims, **characterised in that** the plate (1) has a thermal conductivity of more than 2 W/mK.

7. Device according to any of the preceding claims, **characterised in that** the plate (1) is made of a mixture of expanded graphite and a binder, in particular a resin or a plastics material.

8. Device according to claim 7, **characterised in that** the proportion of the binder is 5 to 50 % by weight and preferably between 8 and 12 % by weight.

9. Device according to any of claims 1 to 6, **characterised in that** the plate (1) is made from a mixture of expanded graphite and an in particular salt-based, wax-based or paraffin-based phase-change material (PCM).

10. Device according to any of the preceding claims, **characterised in that** the component (5) is a concrete cover or concrete wall.

11. Device according to any of the preceding claims, **characterised in that** a plurality of plates (1) having pipelines (9) embedded therein are fixed positioned side by side on the surface (11) of the component (5).

12. Device according to claim 11, **characterised in that** the pipelines (9) of plates (1) positioned side by side are interconnected to form a line circuit, and **in that** the line circuit is coupled to a conveying device for passing a heating or cooling medium through the pipelines (9).

13. Device according to any of the preceding claims, **characterised in that** a reinforcing layer (6) is applied to the surface (13) of the plate (1) remote from the component (5).

14. Device according to any of the preceding claims, **characterised in that** a reinforcing layer (6) is applied to both surfaces (12, 13) of the plate (1).

15. Device according to any of the preceding claims, **characterised in that** the plate (1) is arranged in a frame (2) fixed to the component (5).

16. Device according to claim 15, **characterised in that** the frame (2) is made of a thermally conductive material, in particular of a metal sheet.

17. Device according to either claim 15 or claim 16, **characterised in that** the plate (1) is glued in the frame (2).

18. Device according to any of claims 15 to 17, **characterised in that** the frame is formed as a case (2) which is open on one side.

19. Device according to any of claims 15 to 18, **characterised in that** the plate (1) arranged in the case protrudes beyond the frame edge (2c) thereof on the open side of the case.

20. Device according to any of claims 15 to 19, **characterised in that** the frame (2) is formed as a case having a perforated base plate (2a).

21. Device according to claim 20, **characterised in that** a non-woven (3) and a perforated graphite film (15) are arranged between the base plate (2a) of the frame (2) and the plate (1).

22. Device according to either claim 20 or claim 21, **characterised in that** the graphite film (15) is an expanded graphite film perforated with holes.

23. Device according to any of claims 20 to 22, **characterised in that** the perforated graphite film (15) is rigidly connected to the non-woven (3).

24. Device according to any of claims 20 to 23, **characterised in that** the non-woven (3) is a glass-fibre non-woven or a carbon-fibre non-woven.

25. Device according to any of claims 20 to 24, **characterised in that** the non-woven (3) is a carbon-fibre non-woven which is connected to the perforated graphite film (15) by calendering.

26. Device according to any of the preceding claims, **characterised in that** the plate (1) having the pipelines (9) embedded therein is self-supporting.

27. Method for temperature-controlling a chamber defined on at least one side by a component (5), the component (5) having a surface (11) facing into the chamber and the mass of the component (5) forming a thermal store, which is thermally coupled to pipelines (9) through which a heating or cooling medium is passed, **characterised in that** the pipelines (9) are embedded in a thermally conductive plate (1) which contains expanded graphite or consists of graphite expandate, and the plate (1) is in planar thermal contact with the surface (11) of the component (5) facing into the chamber, in such a way that at least part of the thermal energy stored in the heating or cooling medium is transferred by thermal conduction from the pipelines (9) via the thermally conductive plate (1) to the thermal store for buffering and is emitted therefrom to the chamber with a time delay.

## Revendications

1. Mécanisme destiné à la thermorégulation d'une pièce, dans lequel le mécanisme comprend au moins un élément structurel (5), lequel forme un accumulateur thermique et présente une surface (11) orientée en direction de la pièce, ainsi qu'avec des tuyauteries (9) qui sont couplées thermiquement à l'élément structurel (5) et qui peuvent être alimentées avec un agent de chauffage ou de refroidissement, **caractérisé en ce que** les tuyauteries (9) sont intégrées dans un panneau (1), lequel contient du graphite expansé ou est constitué de graphite expansé et le panneau (1) se trouve en contact thermique face contre face avec la surface (11) de l'élément structurel qui est orientée en direction de la pièce.

2. Mécanisme selon la revendication 1, **caractérisé en ce que** le panneau (1) en graphite expansé est fixé à la surface (11) de l'élément structurel (5) par l'intermédiaire d'une couche adhésive (4) thermoconductrice.

3. Mécanisme selon la revendication 1 ou 2, **caractérisé en ce que** les tuyauteries (9) se prolongent dans le panneau (1) sous la forme de serpentins, sous la forme de grilles, sous la forme de spirales ou sous la forme de méandres.

4. Mécanisme selon l'une des revendications précédentes, **caractérisé en ce que** le panneau (1) se trouve en jonction thermoconductrice avec la surface (11) de l'élément structurel (5), et ce sur la totalité de sa surface principale (12) qui est orientée vers la surface (11).

5. Mécanisme selon l'une des revendications précédentes, **caractérisé en ce que** la densité du panneau (1) est comprise entre 0,04 et 0,10 g/cm³.

6. Mécanisme selon l'une des revendications précédentes, **caractérisé en ce que** le panneau (1) présente une conductivité thermique supérieure à 2 W/mK.

7. Mécanisme selon l'une des revendications précédentes, **caractérisé en ce que** le panneau (1) est fabriqué à partir d'un mélange de graphite expansé et d'un agent de liaison, en particulier une résine ou une matière plastique.

8. Mécanisme selon la revendication 7, **caractérisé en ce que** la proportion de l'agent de liaison est comprise entre 5 et 50 % en poids et de préférence entre 8 et 12 % en poids.

9. Mécanisme selon l'une des revendications 1 à 6, **caractérisé en ce que** le panneau (1) est fabriqué à partir d'un mélange de graphite expansé et d'un matériau accumulateur de chaleur latente (PCM), en particulier à base de sel, de cire ou de paraffine.

10. Mécanisme selon l'une des revendications précédentes, **caractérisé en ce que** l'élément structurel (5) en question est une dalle de béton ou une paroi en béton.

11. Mécanisme selon l'une des revendications précédentes, **caractérisé en ce que** plusieurs panneaux (1) sont fixés, en reposant les uns à côté des autres, à la surface (11) de l'élément structurel (5) avec les tuyauteries (9) qui sont intégrées à l'intérieur.

12. Mécanisme selon la revendication 11, **caractérisé en ce que** les tuyauteries (9) sont reliées les unes avec les autres par des panneaux (1) reposant les uns à côté des autres en vue de la formation d'un circuit de conduite et **caractérisé en ce que** le circuit de conduite est couplé à un mécanisme de transport par l'intermédiaire des tuyauteries (9) en vue de la circulation d'un agent de chauffage ou de refroidissement.

13. Mécanisme selon l'une des revendications précédentes, **caractérisé en ce qu'**une couche de renforcement (6) est mise en place sur la surface (13) du panneau (1), laquelle se trouve à l'opposé de l'élément structurel (5).

14. Mécanisme selon l'une des revendications précédentes, **caractérisé en ce qu'**une couche de renforcement (6) est mise en place sur les deux surfaces (12, 13) du panneau (1).

15. Mécanisme selon l'une des revendications précédentes, **caractérisé en ce que** le panneau (1) est disposé dans un châssis (2) qui est fixé à l'élément structurel (5).

16. Mécanisme selon la revendication 15, **caractérisé en ce que** le châssis (2) est fabriqué à partir d'un matériau thermoconducteur, en particulier à partir d'une tôle en métal.

17. Mécanisme selon la revendication 15 ou 16, **caractérisé en ce que** le panneau (1) est encollé dans le châssis (2).

18. Mécanisme selon l'une des revendications 15 à 17, **caractérisé en ce que** le châssis est conçu sous la forme d'une cassette (2), laquelle est ouverte au niveau d'une face.

19. Mécanisme selon l'une des revendications 15 à 18, **caractérisé en ce que** le panneau (1) disposé dans la cassette fait saillie au niveau de la face ouverte de la cassette par la bordure (2c) de son châssis.

20. Mécanisme selon l'une des revendications 15 à 19, **caractérisé en ce que** le châssis (2) est conçu sous la forme d'une cassette avec une plaque de base (2a) perforée.

21. Mécanisme selon la revendication 20, **caractérisé en ce qu'**un matériau non tissé (3) et une feuille de graphite (15) perforée sont disposés entre la plaque de base (2a) du châssis (2) et le panneau (1).

22. Mécanisme selon l'une des revendications 20 ou 21, **caractérisé en ce que** la feuille de graphite (15) en question est une feuille constituée de graphite expansé, laquelle est perforée par un trou.

23. Mécanisme selon l'une des revendications 20 à 22, **caractérisé en ce que** la feuille de graphite (15) perforée est reliée fermement au matériau non tissé (3).

24. Mécanisme selon l'une des revendications 20 à 23, **caractérisé en ce que** le matériau non tissé (3) est un matériau non tissé en fibres de verre ou un matériau non tissé en fibres de carbone.

25. Mécanisme selon l'une des revendications 20 à 24, **caractérisé en ce que** le matériau non tissé (3) est un matériau non tissé en fibres de carbone, lequel est relié à la feuille de graphite (15) perforée par l'intermédiaire d'un calandrage.

26. Mécanisme selon l'une des revendications précédentes, **caractérisé en ce que** le panneau (1) est autoportant avec les tuyauteries (9) qui sont intégrées à l'intérieur.

27. Procédé destiné à la thermorégulation d'une pièce délimitée, tout au moins sur un côté, par un élément structurel (5), dans lequel l'élément structurel (5) présente une surface (11) orientée en direction de la pièce et la masse de l'élément structurel (5) forme un accumulateur thermique, lequel est couplé thermiquement avec des tuyauteries (9), à travers lesquelles un agent de chauffage ou de refroidissement est conduit, **caractérisé en ce que** les tuyauteries (9) sont intégrées dans un panneau (1) thermoconducteur, lequel contient du graphite expansé ou est constitué de graphite expansé, et le panneau (1) se trouve en contact thermique, face contre face, avec la surface (11) de l'élément structurel (5) qui est orientée en direction de la pièce, de telle sorte que tout au moins une partie de l'énergie thermique emmagasinée dans l'agent de chauffage ou de refroidissement est transmise selon un principe de conduction thermique par les tuyauteries (9), en passant par le panneau (1) thermoconducteur, jusqu'à l'accumulateur thermique en vue d'un stockage intermédiaire et, de là, est restituée au niveau de la pièce de manière temporisée.
